# EUROPEAN PATENT APPLICATION

(11) **EP 2 293 551 A1**
(43) Date of publication of application: **09.03.2011**
(21) Application number: 10173885.4
(22) Date of filing: 24.08.2010
(51) Int. Cl.: H04N 5/52, H04N 5/57, G09G 3/00

(54) **Image display apparatus and luminance control method thereof**

(30) Priority: 28.08.2009 JP 2009198640
(71) Applicant: Canon Kabushiki Kaisha, Tokyo 146-8501 (JP)
(72) Inventor: Tsuchiya, Yutaka, Tokyo 146-8501 (JP); Sagano, Osamu, Tokyo 146-8501 (JP)
(74) Representative: TBK-Patent

(57) **Abstract**

An image display apparatus includes: a display panel; a calculation circuit that calculates a luminance control value, which is a parameter for controlling display luminance, for each frame of a video signal to be displayed on the display panel; and a luminance control circuit that controls the display luminance of the frame using the luminance control value calculated by the calculation circuit. When the video signal is a video signal in which one image is constituted by a plurality of frames, the luminance control circuit applies a same luminance control value to the plurality of frames constituting one image, or decreases the difference of the luminance control values applied to the plurality of frames constituting one image to be lower than a predetermined value.

## Description

### BACKGROUND OF THE INVENTION

### Field of the Invention

The present invention relates to luminance control for an image display apparatus.

### Description of the Related Art

A flat type image display apparatus that is available has a display panel in which a plurality of display elements are disposed in a matrix. Some of this type of image display apparatuses have a luminance control circuit which multiplies the image data by a gain (luminance control value) according to the luminance of each frame, so as to adaptively control the display luminance. Japanese Patent Application Laid-Open No. 2003-233344 discloses an image display apparatus enclosing a correction circuit, wherein the image data is multiplied by a gain so that the image data after correction is confined to an optimum range. Japanese Patent Application Laid-Open No. 2000-250463 discloses a configuration to control the display luminance by multiplying the image data by a gain according to the average picture level of the input image data.

Recently as display technology advances, not only higher definition but three-dimensional image display (3D) technology as well has started to see practical use. Japanese Patent Application Laid-Open No. 2000-275575 discloses an example of a 3D image display. According to this configuration example, a 3D image is visually constructed by alternately displaying a frame for the left eye and a frame for the right eye, and showing only a frame corresponding to the eye(s) using liquid crystal shutter glasses. As represented by this 3D image display example, a video signal, in which one image is constituted by a plurality of frames, is currently starting to be seen.

### SUMMARY OF THE INVENTION

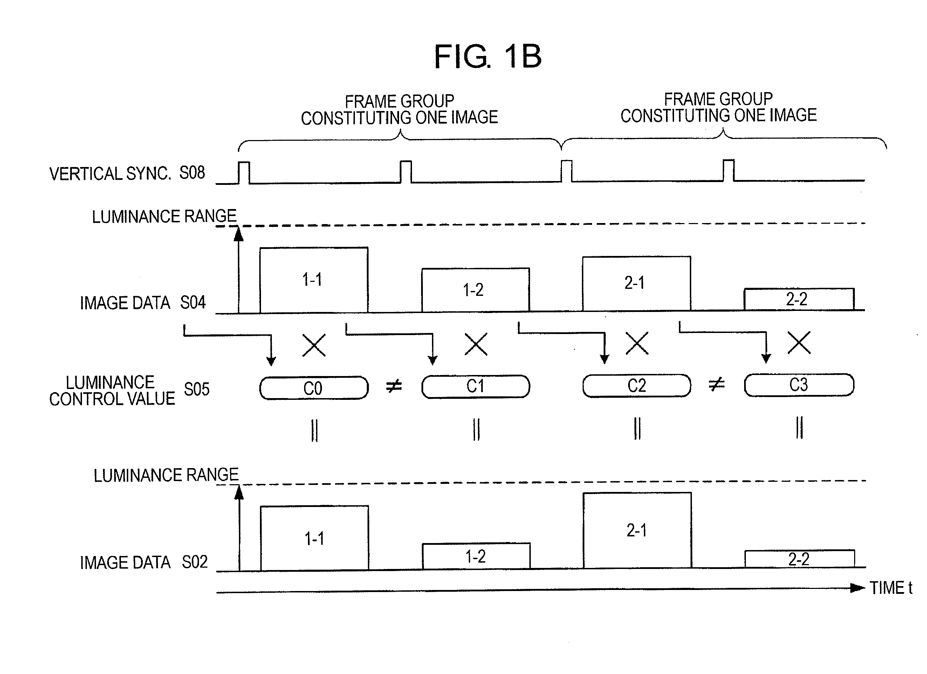

If the conventional adaptive luminance control is performed for a video signal in which one image is constituted by a plurality of frames, the following problem occurs. According to the conventional method, a gain (luminance control value) is individually calculated based on the luminance of each frame of a frame group constituting one image, as shown in Fig. 1B. Therefore it is possible that a different gain is applied to each frame, and the dynamic range of the luminance may differ depending on the frame. In such a case, luminance balance among frames constituting one image is different from the original image that was input, and it may cause a viewer of the display image to feel unnaturalness.

The present invention provides a technology for appropriately controlling the display luminance of the video signal in which one image is constituted by a plurality of frames.

The present invention in its first aspect provides an image display apparatus as specified in claims 1 to 6.

The present invention in its second aspect provides a luminance control method for an image display apparatus having a display panel as specified in claim 7.

According to the present invention, it is possible to appropriately control the display luminance of the video signal in which one image is constituted by a plurality of frames.

Further features of the present invention will become apparent from the following description of exemplary embodiments with reference to the attached drawings.

### BRIEF DESCRIPTION OF THE DRAWINGS

Fig. 1A is a block diagram depicting a configuration of a luminance control circuit of Embodiment 1 of the present invention, Fig. 1B is a diagram depicting a normal adaptive luminance control, and Fig. 1C is a diagram depicting a luminance control of Embodiment 1;
Fig. 2A and Fig. 2B are diagrams depicting examples of a video signal;
Fig. 3A is a block diagram depicting a configuration of a luminance control value calculation circuit, and Fig. 3B is a diagram depicting a luminance control method;
Fig. 4 is a diagram depicting a configuration of a display panel;
Fig. 5A is a block diagram depicting a configuration of a luminance control circuit of Embodiment 2 of the present invention, Fig. 5B is a diagram depicting a normal adaptive luminance control, and Fig. 5C is a diagram depicting a luminance control of Embodiment 2;
Fig. 6A and Fig. 6B are diagrams depicting examples of a video signal of Embodiment 3 of the present invention;
Fig. 7A and Fig. 7B are diagrams depicting an example of a video signal of Embodiment 4 of the present invention, and Fig. 7C shows an operation of the shutter glasses; and
Fig. 8A is a diagram depicting a normal adaptive luminance control, and Fig. 8B is a diagram depicting a luminance control of Embodiment 4 of the present invention.

### DESCRIPTION OF THE EMBODIMENTS

The present invention relates to a flat type image display apparatus which has a display panel in which a plurality of display elements are disposed in a matrix. Examples of the flat type image display apparatus are an electron beam display apparatus, a plasma display apparatus, a liquid crystal display apparatus, and an organic EL display apparatus, and the present invention can be applied to any type of these display apparatuses. For example, the display panel of the electron beam display apparatus is normally comprised of a rear plate on which a plurality of electron-emitting devices (cold cathode devices) are disposed in a matrix, and a face plate on which phosphors are disposed. Examples of the electron-emitting device are a surface conduction electron-emitting device, a field emission type electron-emitting device, and an MIM type electron-emitting device. Examples of the field emission type are a Spindt type, a GNF (Graphite Nano Fiber) type and a CNT (Carbon Nano Tube) type.

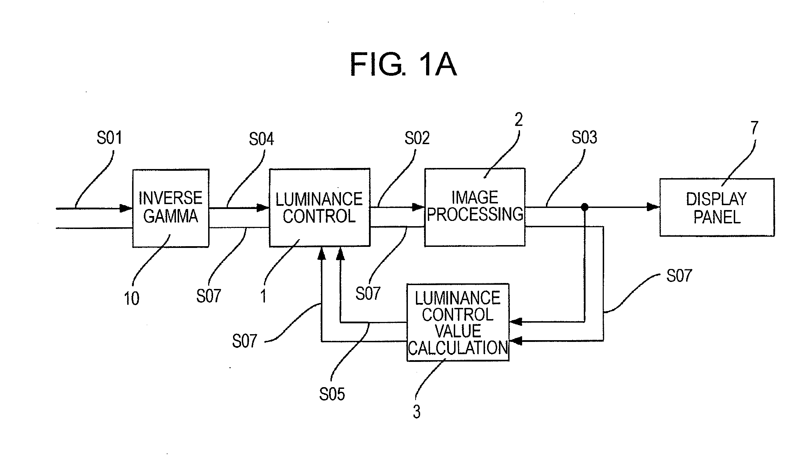

The image display apparatus of the present invention has a display panel (e.g. 7 in Fig. 1A), a calculation circuit (3) which calculates a luminance control value for each frame of the video signal, and a luminance control circuit (1) which controls the display luminance of a corresponding frame using the luminance control value. Here the calculation circuit calculates (detects) a representative value of the luminance of a frame based on the data (pixel value, luminance value) of the frame, and calculates a luminance control value (gain), which is a parameter for controlling the display luminance, based on the representative value of the luminance. The representative value of the luminance is, for example, a maximum value, minimum value or average value (also called "average picture level (APL)") of the luminance in one frame. These values can also be called a characteristic value of the luminance or a statistical value of the luminance. The luminance control circuit adjusts the display luminance by multiplying the data of the frame by the luminance control value (gain). Controlling the display luminance of the frame, using a gain according to the luminance (representative value of the luminance) of the frame like this, is also called "adaptive luminance control".

For a normal video signal, the luminance control circuit performs normal adaptive luminance control, and updates the luminance control value for each frame. For a video signal in which one image is constituted by a plurality of frames, the luminance control circuit either applies a same luminance control value to the plurality of frames constituting one image, or decreases the difference of the luminance control values applied to the plurality of frames to be lower than a predetermined value. The "predetermined value" is set to a value with which the viewer cannot visually recognize that the balance of the luminances of the plurality of frames has changed before and after luminance control. The predetermined value may be a fixed value determined by experiments, or may be a value which changes according to the representative value of the luminances of the plurality of frames. For example, the "predetermined value" can be set to be lower as the image becomes darker, since human eyes are sensitive to the change of luminance in the low luminance range. According to the experiments by the inventors, good results are obtained if the change of the luminance control value applied to each of the plurality of frames is 1% or less.

According to this configuration, the balance of luminance among the plurality of frames constituting one image can be maintained by using a same or a substantially same luminance control value for the plurality of frames. Therefore unnaturalness and drop in quality of the display image can be suppressed.

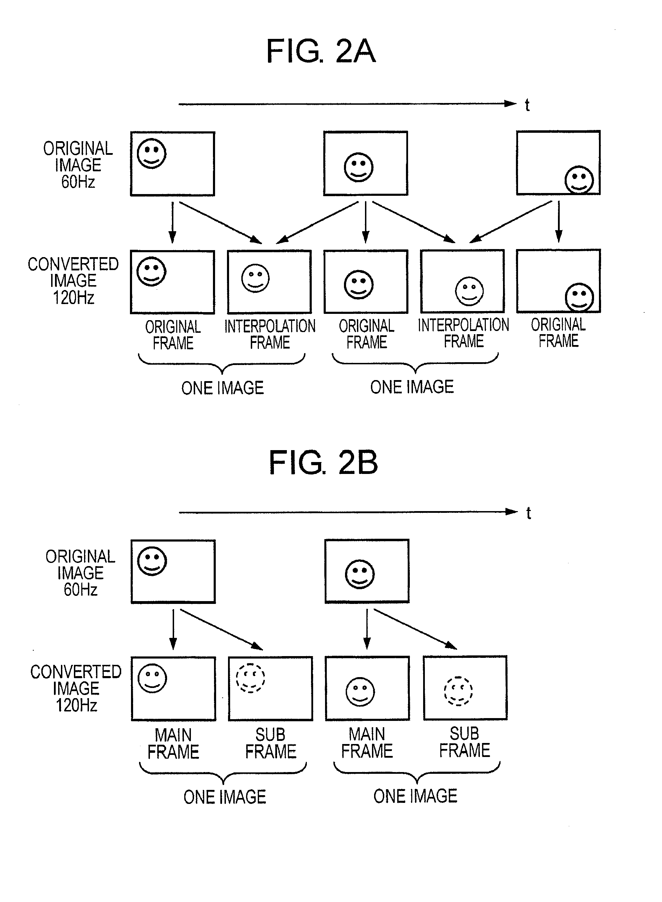

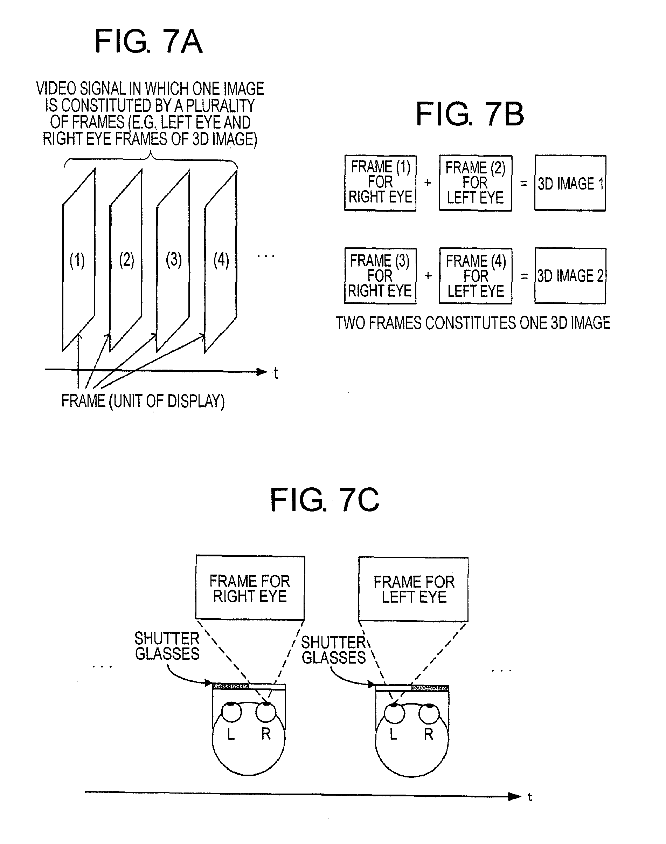

Examples of a video signal in which one image is constituted by a plurality of frames are as follows.
(1) Video signal for three-dimensional display in which one image is constituted by a frame for a left eye and a frame for a right eye (see Fig. 7A).
(2) Video signal in which an interpolation frame is inserted between original frames of the original video signal (see Fig. 2A). In this case, it is regarded that one image is constituted by the original frame and the interpolation frame. The interpolation frame may be a duplicate of the original frame, or may be a frame obtained by interpolating the original frames before and after. A plurality of interpolation frames may be inserted.
(3) Video signal obtained by dividing (distributing) the luminance of the original frame of the original video signal into a plurality of consecutive frames (frames in time series). Fig. 2B is an example of constituting one image by a sub-frame, which is generated by low-pass filtering on the original frame or decreasing the luminance of the original frame, and a main frame which is obtained by subtracting the sub-frame from the original frame. In some cases, one original frame may be divided into three or more frames.
It is preferable that each of the plurality of frames constituting one image is displayed by progressive scanning. In the case of interlace scanning, a combination of an odd field and an even field is regarded as one frame.

The "same luminance control value", which is uniformly applied to the plurality of frames, can be calculated by various approaches. For example, the same luminance control value may be a luminance control value that is calculated by data on one frame (typically a first frame) out of the plurality of frames constituting one image. The same luminance control value may also be an average value, maximum value, minimum value or other statistical value, of a plurality of luminance control values respectively calculated based on data of the plurality of frames constituting one image.

### (Embodiment 1)

Fig. 1A is a block diagram depicting a configuration of a luminance control circuit according to Embodiment 1. A basic flow of signals in this configuration will be shown below.

An image input S01 is first input to an inverse gamma processing circuit 10, transformed to be linear with respect to the luminance, so as to become image data S04. The luminance control processing is performed on the image data S04 by being multiplied by a luminance control value S05 in the luminance control circuit 1, so as to become image data S02. The image data S02 is transformed to be drive data S03, that is optimum for a display panel 7, by the image processing circuit 2, and the drive data S03 is output to the display panel 7. The drive data S03 is also input to a luminance control value calculation circuit 3. The luminance control value calculation circuit 3 calculates a luminance control value S05 by the drive data S03 and a frame identification signal S07 which are input, and outputs the calculated luminance control value S05 to the luminance control circuit 1. The luminance control circuit 1 performs the luminance control processing on the next image data S04 using the calculated luminance control value S05. This configuration is a feedback type luminance control circuit in which the luminance control value determined in a frame is multiplied not in this frame but in the next frame. Here correlation of data between the frames is utilized.

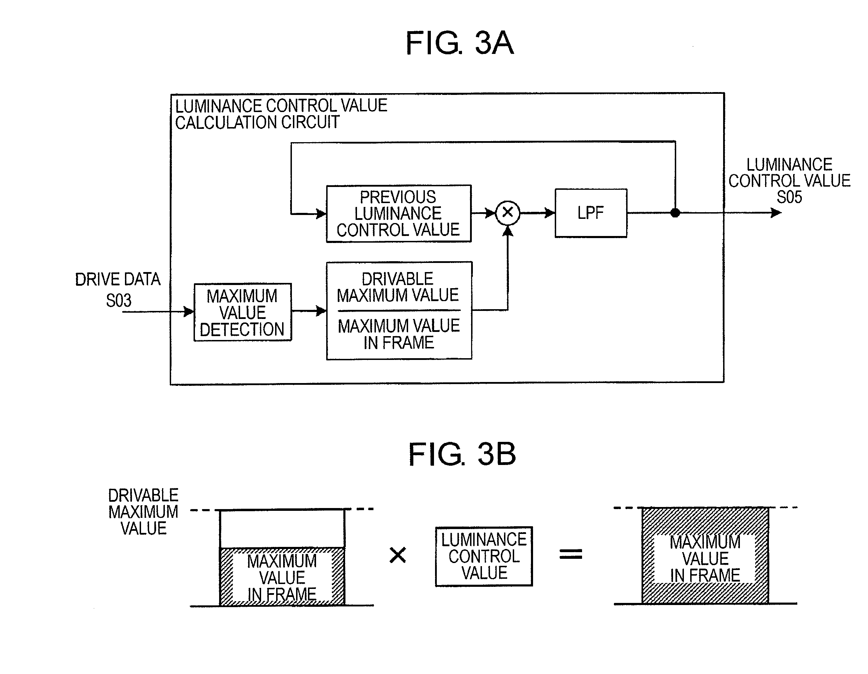

A merit of calculating the luminance control value based on the drive data is that the luminance control value can be calculated so that the maximum value of the drive data of the frame can be the maximum drive data in one horizontal period. Fig. 3A is a block diagram depicting the operation of the luminance control value calculation circuit 3. The luminance control value calculation circuit 3 detects the maximum value of the drive data in one frame from the drive data S03 which is input. The drivable maximum value, that can be determined by one horizontal period, is divided by the detected maximum value in one frame to obtain the quotient. By multiplying the obtained quotient by the previous luminance control value, a new luminance control value S05 is obtained. Thereby as shown in Fig. 3B, the luminance can be controlled so that the maximum value in the frame becomes substantially the same as the maximum value that the panel can drive, and the display luminance can be increased. In this embodiment, a low pass filter (LPF) is disposed in the output unit in order to suppress the drastic change of the luminance control values among frames.

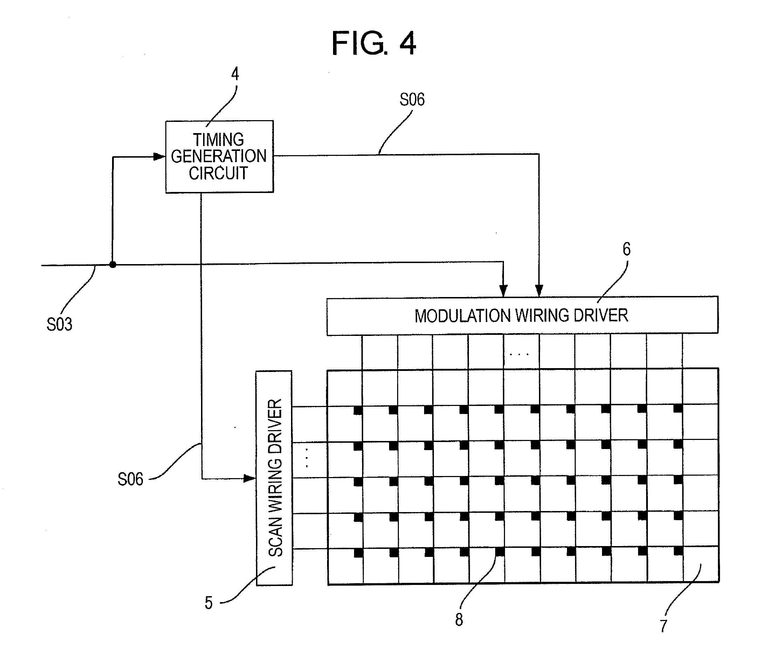

Fig. 4 is a block diagram depicting a display panel. The display panel 7 has a plurality of display elements 8 which are arranged in a matrix. The plurality of display elements 8 are wired in a simple matrix by a plurality of scan wirings and a plurality of modulation wirings. A timing generation circuit 4 generates a timing signal S06 for driving a driver based on a vertical synchronization signal and horizontal synchronization signal which are input. A scan wiring driver 5 and a modulation wiring driver 6 drive the scan wirings and modulation wirings of the display panel 7 respectively based on the drive data S03 and the timing signal S06 for driving a driver, so that the display element 8, which exists at each intersection of these wirings, emits light. At this time, a pulse width and/or amplitude of the drive signal (potential difference of the scan wiring and modulating wiring) to be applied to the display element 8 are/is controlled according to the value of the drive data S03, so that the display element 8 emits light at a desired display luminance. Thereby an image is displayed on the display panel 7.

Now a case when a video signal, in which one image is constituted by a plurality of frames, is input to the circuit in Fig. 1A, is considered.
Fig. 1B is a diagram depicting an operation when an ordinary adaptive luminance control is performed in the above mentioned circuit. The ordinate of the image data S02 and S04 in Fig. 1B indicates luminance, and the abscissa indicates time. The broken line indicates a luminance range (maximum value that can be driven), and the rectangular portion indicates a luminance of a pixel in the frame. In this embodiment, one image is constituted by two frames. The first frame in the n-th image is denoted as "n-1", and the second frame thereof is denoted as "n-2".

The luminance control is performed for the frame 1-2 using the luminance control value C1 calculated based on the drive data in the frame 1-1, and the luminance control is performed for the frame 2-1 using the luminance control value C2 calculated based on the drive data in the frame 1-2. In this way, the luminance control value S05 is calculated based on the data S03 in the frame to be output, and the image data S02 is obtained by multiplying the data S04 in the next input frame by this luminance control value S05.

With this method however, various luminance control values are calculated within the frame group constituting one image. Therefore if luminance control is performed using these luminance control values, luminance balance (luminance ratio) among the frames in the frame group constituting one image may change. In the case of the example in Fig. 1B, the luminance balance of the frames 1-1 and 1-2 is largely different between the image data S04 before luminance adjustment and the image data S02 after luminance adjustment. This kind of change of luminance balance causes a drop in quality of the display image, and is therefore not desirable.

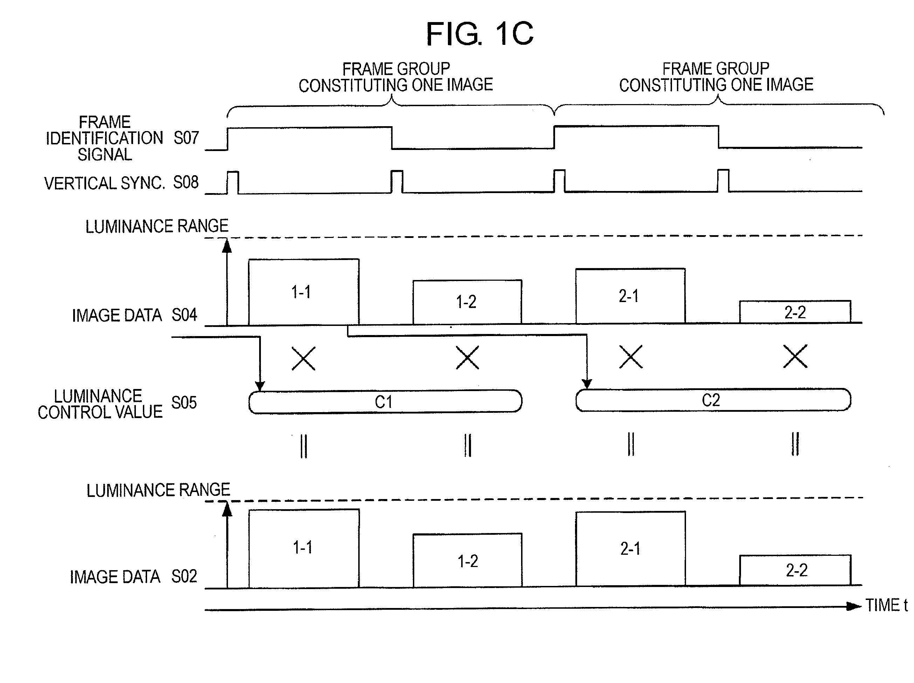

Therefore in this embodiment, luminance control is performed for all the frames in the frame group using the luminance control value calculated based on the main frame (first frame) out of the frame group constituting one image, as shown in Fig. 1C.

A frame identification signal S07 is input to the luminance control value calculation circuit 3. The frame identification signal S07 is a signal which becomes Hi in a period when the data of the main frame is input, and becomes Low in a period when data of the other frames is input. The luminance control value calculation circuit 3 determines whether the data is related to the main frame or not by this frame identification signal S07, and calculates the luminance control value only when the data is related to the main frame. The luminance control value C2 calculated based on the main frame 1-1 by the luminance control value calculation circuit 3 is output to the luminance control circuit 1, and is held until a new luminance control value is output.

The luminance control circuit 1 applies the luminance control value C1 calculated based on the previous image to the frames 1-1 and 1-2. When the next frame 2-1 is input, the luminance control circuit 1 updates the luminance control value C1 to the luminance control value C2, and applies the luminance control value C2 to the frames 2-1 and 2-2. By this method, a same luminance control value is applied to the plurality of frames constituting one image. Therefore as Fig. 1C shows, the luminance balance among frames can be maintained before and after the luminance control, and high brightness and high quality image display can be implemented, even for a video signal in which one image is constituted by a plurality of frames.

The frame identification signal S07 is not limited to the example in Fig. 1C. For example, the frame identification signal may be a short pulse that indicates the beginning of a main frame, or a signal that becomes Low in a main frame, and Hi in a sub-frame.

In this embodiment, the luminance control value is set such that a same value is used for the main frame and the sub-frame, but the present invention is not limited to this, and the inventors discovered that a similar effect is implemented even if the change of luminance control value between the main frame and the sub-frame is limited. The result is particularly desirable if the change of the luminance control value is 1% or less. In concrete terms, the luminance control value calculation circuit 3 calculates the luminance control values for both the main and sub-frames, and the control value(s) of the sub-frame and/or the main frame are/is corrected if the change of the luminance control values between the main and the sub-frames exceed a predetermined value (e.g. 1%).

In this embodiment, the luminance control value calculation circuit 3 determines whether the type of frame is the main frame or not, and calculates the luminance control value only if it is the main frame. However it is also acceptable that the luminance control value calculation circuit 3 calculates the luminance control values for all the frames, and the luminance control circuit 1 determines a type of frame based on the frame identification signal S07, and applies a same luminance control value for the main frame and the sub-frame. With this configuration as well, a similar functional effect as the above mentioned embodiment can be obtained. If the delay between the input data and output of the luminance control value is constant and known, such as the case when the frame to be multiplied is always the next frame, the frame identification signal S07, in the portion to be output from the luminance control value calculation circuit 3 to the luminance control circuit 1, may be omitted.

### (Embodiment 2)

Embodiment 1 showed the feedback type luminance control processing, but Embodiment 2 shows a case of applying the present invention to the feed forward type luminance control processing. The content of the luminance control values and calculation and multiplication method thereof can be the same as Embodiment 1.

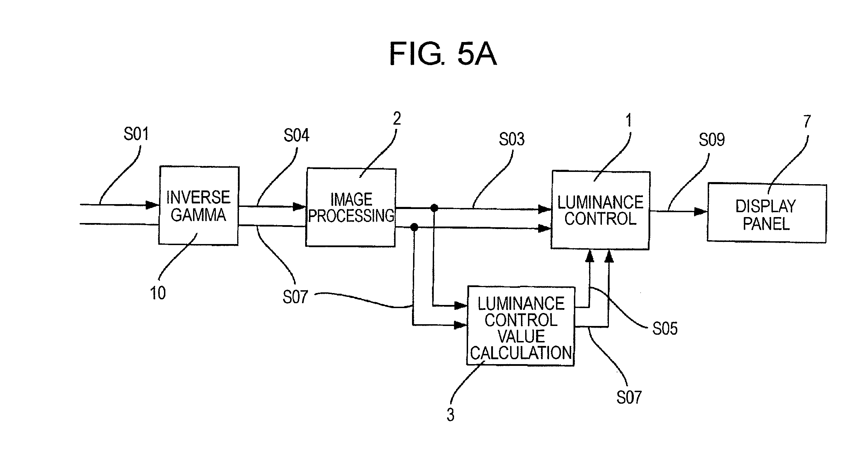

Fig. 5A is a block diagram depicting a circuit that performs feed forward type luminance control processing. An image input S01 is a video signal in which one image is constituted by a plurality of frames. The image input S01 is first transformed to be linear with respect to the luminance by the inverse gamma processing circuit 10, so as to become image data S04. The image data S04 is transformed to be drive data S03, that is optimum for the display panel 7, by the image processing circuit 2. The drive data S03 is input to the luminance control circuit 1 and the luminance control value calculation circuit 3.

The luminance control value calculation circuit 3 calculates the luminance control value S05 based on the drive data S03 and the frame identification signal S07 which are input, and outputs the calculated luminance control value S05 to the luminance control circuit 1. The luminance control circuit 1 performs the luminance control on the drive data S03 using the luminance control value S05 calculated by the luminance control value calculation circuit 3, and the luminance-controlled drive data S09 is output to the display panel 7.

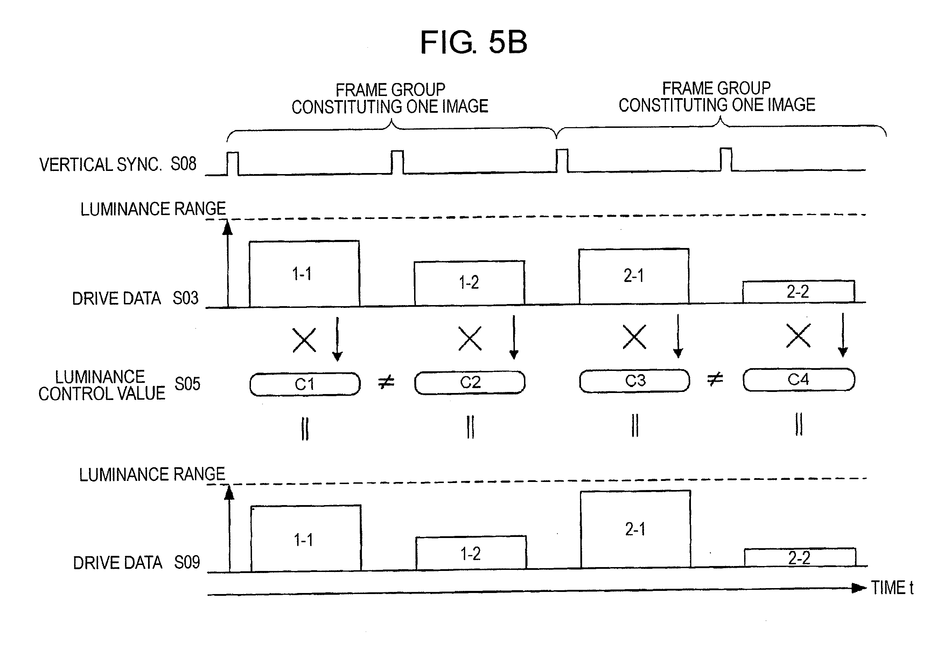

Fig. 5B is a diagram depicting the operation when a normal adaptive luminance control is performed in the above mentioned circuit. The luminance control value C1 calculated from the drive data in the frame 1-1 and the luminance control value C2 calculated from the frame 1-2 are not always the same. Therefore just like Embodiment 1, the problem of a drop in display quality, due to a change of the luminance balance, could occur.

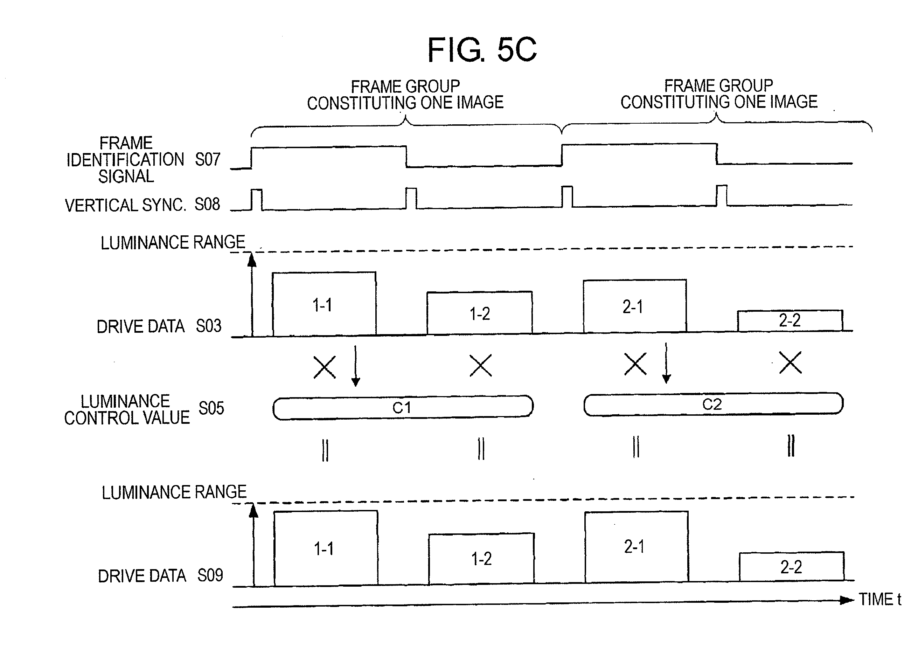

Hence in this embodiment, as shown in Fig. 5C, luminance control is performed for all the frames in the frame group constituting one image using a luminance control value calculated based on the main frame of the frame group. Since this method allows applying a same luminance control value for a plurality of frames constituting one image, luminance balance among the frames is maintained, and high luminance and high quality image display can be implemented.

### (Embodiment 3)

In the case of a hold type display apparatus, such as a liquid crystal display, a low luminance image may be inserted between original frames or double-speed driving may be performed by converting the frame rate in order to decrease the motion blur. By applying a same or substantially same luminance control value for a group of related frames, a similar effect as the above mentioned embodiments can be implemented in such a case as well.

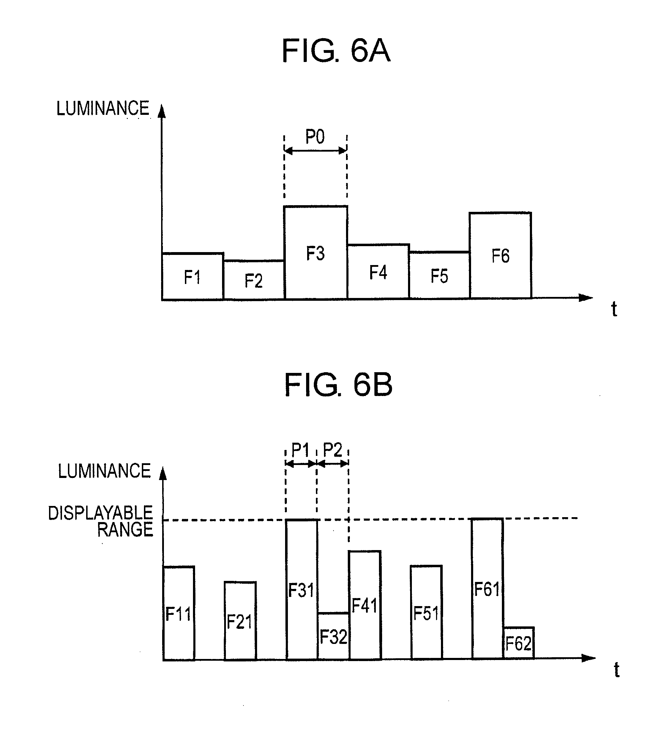

Fig. 6A and Fig. 6B show an example of the drive method disclosed in Japanese Patent Application Laid-Open No. 2004-240317. Fig. 6A shows an original image data, and Fig. 6B shows image data to be written in a pixel. The ordinate indicates the luminance and the abscissa indicates time. According to this drive method, one frame period P0 is divided into the first period P1 and the second period P2, and the data to be written in the pixel during this one frame period is intensively written during the first period P1. At this time, the written value to the pixel is set to double the luminance value of the original image data, so that the luminance of the entire image does not drop. Only when the doubled value exceeds the displayable range, the excess value is written in the second period P2. In the image data generated by this processing, one original image is constituted by a plurality of frames, and the luminance difference among the frames is large. In Fig. 6B, the original image F3 is constituted by the frames F31 and F32, and the original image F6 is constituted by the frames F61 and F62.

In the case of this image data, it is possible that the luminance control value calculated based on the frame (F31) in the first period, and the luminance control value calculated based on the frame (F32) in the second period, are greatly different. Therefore in the case of the normal adaptive luminance control, a problem of a drop in display quality due to a change of the luminance balance could occur, just like the above mentioned embodiments.

Hence in this embodiment, the luminance control is performed by applying the luminance control value calculated from the frame in the first period for both frames in the first period and second period. Since this method allows applying a same luminance control value for a plurality of frames constituting one image, luminance balance among the frames is maintained, and high luminance and high quality image display can be implemented.

### (Embodiment 4)

Embodiment 4 shows a case of inputting a video signal for a three-dimensional display. The circuit configuration, content of luminance control values, and calculation and multiplication method thereof can be the same as one of the above embodiments.

Fig. 7A, Fig. 7B, and Fig. 7C show an example of the 3D display method. As Fig. 7A and Fig. 7B show, one 3D image is constituted by two frames, a frame for the left eye and a frame for the right eye, and the frame for the left eye and the frame for the right eye are alternately displayed. By viewing the frame for the left eye with the left eye and the frame for the right eye with the right eye using shutter glasses, as shown in Fig. 7C, a 3D image can be visually constructed.

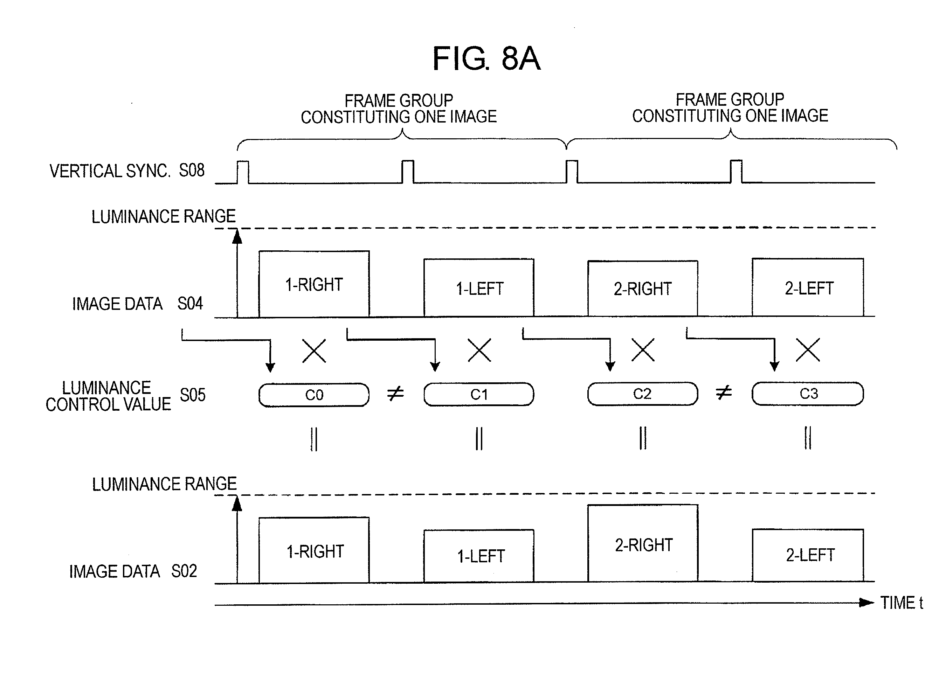

Fig. 8A is a diagram depicting an operation and problem when a normal adaptive luminance control is performed. In the case of a 3D display, the frame for the left eye and the frame for the right eye are slightly different in order to represent parallax. Therefore the luminance control values calculated from the respective frames are not always the same. Hence, a problem of a drop in display quality due to a change of the luminance balance could occur, just like Embodiment 1. Furthermore, if the difference of luminance between the frame for the left eye and frame for the right eye is large, flickering effect called flicker may be seen or a 3D display failure may occur.

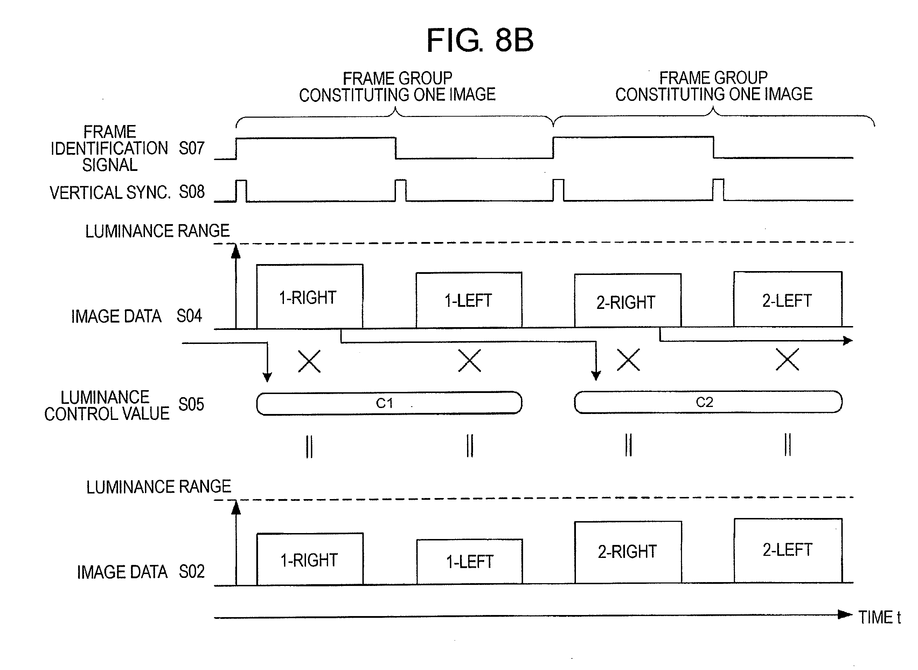

Fig. 8B shows the luminance control operation of this embodiment. In this embodiment, the luminance control value calculated based on the frame for the right eye is applied for both frames, for the right eye and left eye. Since this method allows applying a same luminance control value for two frames constituting the 3D image, luminance balance among the frames is maintained, and high luminance and high quality 3D display can be implemented.

### (Embodiment 5)

In the case of a 24 fps (frames per second) video image, which is frequently used in movie content, a plurality of interpolation frames may be inserted between original frames in order to solve the problem of motion blur and flickering, whereby display operation is performed at a higher frame rate than an original image. For example, in the case of inserting two interpolation frames, the frame rate is 72 fps, and in the case of inserting three interpolation frames, the frame rate is 96 fps, and in the case of inserting four interpolation frames, the frame rate is 120 fps. In this case as well, the luminance balance among the frames is maintained, and high luminance and high quality image display can be implemented by applying a same or substantially same luminance control value for a frame group constituted by an original frame and a plurality of interpolation frames.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An image display apparatus includes: a display panel; a calculation circuit that calculates a luminance control value, which is a parameter for controlling display luminance, for each frame of a video signal to be displayed on the display panel; and a luminance control circuit that controls the display luminance of the frame using the luminance control value calculated by the calculation circuit. When the video signal is a video signal in which one image is constituted by a plurality of frames, the luminance control circuit applies a same luminance control value to the plurality of frames constituting one image, or decreases the difference of the luminance control values applied to the plurality of frames constituting one image to be lower than a predetermined value.

## Claims

1. An image display apparatus, comprising:
a display panel;
a calculation circuit that calculates a luminance control value, which is a parameter for controlling display luminance, for each frame of a video signal to be displayed on the display panel; and
a luminance control circuit that controls the display luminance of the frame using the luminance control value calculated by the calculation circuit, wherein
when the video signal is a video signal in which one image is constituted by a plurality of frames, the luminance control circuit applies a same luminance control value to the plurality of frames constituting one image, or decreases the difference of the luminance control values applied to the plurality of frames constituting one image to be lower than a predetermined value.

2. The image display apparatus according to Claim 1, wherein
the video signal in which one image is constituted by a plurality of frames is a video signal for a three-dimensional display in which one image is constituted by a frame for the left eye and a frame for the right eye.

3. The image display apparatus according to Claim 1, wherein
the video signal in which one image is constituted by a plurality of frames is a video signal obtained by inserting one or more interpolation frames between original frames of an original video signal, and one image is constituted by the original frame and the one or more interpolation frames.

4. The image display apparatus according to Claim 1, wherein
the video signal in which one image is constituted by a plurality of frames is a video signal obtained by dividing the luminance of an original frame of an original video signal into a plurality of consecutive frames , and one image is constituted by the plurality of consecutive frames .

5. The image display apparatus according to any one of Claims 1 to 4, wherein
the luminance control circuit applies a same luminance control value to a plurality of frames constituting one image, and
the same luminance control value is a luminance control value calculated based on data of one frame among the plurality of frames constituting one image.

6. The image display apparatus according to any one of Claims 1 to 4, wherein
the luminance control circuit applies a same luminance control value to a plurality of frames constituting one image, and
the same luminance control value is a statistical value of a plurality of luminance control values respectively calculated based on data of the plurality of frames constituting one image.

7. A luminance control method for an image display apparatus having a display panel, comprising:
a calculation step of calculating a luminance control value, which is a parameter for controlling display luminance, for each frame of a video signal to be displayed on the display panel; and
a luminance control step of controlling the display luminance of the frame using the luminance control value calculated in the calculation step, wherein
when the video signal is a video signal in which one image is constituted by a plurality of frames, a same luminance control value is applied to the plurality of frames constituting one image, or the difference of the luminance control values applied to the plurality of frames constituting one image is decreased to be lower than a predetermined value in the luminance control step.
